# EUROPEAN PATENT APPLICATION

(11) **EP 4 793 999 A1**
(43) Date of publication of application: **19.08.2026**
(21) Application number: 25210536.6
(22) Date of filing: 22.10.2025
(51) Int. Cl.: H01M 4/04, B23K 26/38, G01N 21/892, H01M 10/04, H01M 50/533

(54) **METHOD AND DEVICE FOR MANUFACTURING ELECTRODE ASSEMBLY FOR SECONDARY BATTERY**

(30) Priority: 13.02.2025 KR 20250018433
(71) Applicant: SAMSUNG SDI CO., LTD., Yongin-si, Gyeonggi-do 17084 (KR)
(72) Inventor: KIM, Cheol An, 17084 Yongin-si, Gyeonggi-do (KR)
(74) Representative: Bardehle Pagenberg Partnerschaft mbB Patentanwälte Rechtsanwälte

(57) **Abstract**

A method and apparatus for manufacturing an electrode assembly for secondary batteries. The method includes: a notching step comprising notching at least one side of each electrode plate of a plurality of electrode plates to form at least one substrate tab on each electrode plate of the plurality of electrode plates; an inspection step comprising primarily selecting a defective product from among the electrode plates each having the at least one substrate tab, a marking step comprising removing a portion of the at least one substrate tab of the electrode plate of the plurality of electrode plates that has been primarily selected as the defective product, and a final inspection step comprising detecting the electrode plate from which the portion of the at least one substrate tab has been removed to secondarily select the defective product.

## Description

### BACKGROUND

### 1. Field

Embodiments of the present disclosure relate to a method and apparatus for manufacturing an electrode assembly for secondary batteries.

### 2. Description of the Related Art

Unlike a primary battery, a secondary battery may be charged and discharged. Low-capacity secondary batteries having a single battery cell packaged in the form of a pack are for example widely employed in small, portable electronic devices, such as smart phones, feature phones, laptop computers, digital cameras, camcorders, and the like, while large-capacity secondary batteries are for example widely used as power sources for driving motors in hybrid vehicles, electric vehicles, and the like, as well as batteries for power storage. The secondary battery generally includes an electrode assembly comprising a positive electrode and a negative electrode, a case that accommodates the electrode assembly, and electrode terminals connected to the electrode assembly.

The electrode terminal connected to the electrode assembly may be formed by coupling a separate electrode tab or notching a part of an uncoated portion of an electrode plate. If a defect occurs in a process of notching a part of the uncoated portion of the electrode plate, a defective product may be marked as defective by punching, labeling, or laser marking a part of the defective product.

The above information disclosed in this Background section is only for enhancement of understanding of the background of the present disclosure and therefore it may contain information that does not constitute related or prior art.

### SUMMARY

Embodiments of the present disclosure provide a method and apparatus for manufacturing an electrode assembly for secondary batteries that makes it easier to identify defective products that occur during a process of notching a substrate tab of an electrode assembly.

However, the technical problems to be achieved in the embodiments of the disclosure are not limited to the technical problems mentioned above, and other technical problems not mentioned herein will be clearly understood from the following description by those skilled in the art to which the disclosure belongs.

A method of manufacturing an electrode assembly for a secondary battery according to an embodiment of the present disclosure to accomplish the above object includes: a notching step comprising notching at least one side of each electrode plate of a plurality of electrode plates (e.g., two or more electrode plates to be included in or for forming the electrode assembly) to form at least one substrate tab on each electrode plate, an inspection step comprising primarily selecting a defective product from among the plurality of electrode plates each having the at least one substrate tab, a marking step comprising removing a portion of the at least one substrate tab of an electrode plate of the plurality of electrode plates that has been primarily selected as the defective product, and a final inspection step comprising detecting the electrode plate from which the portion of the at least one substrate tab has been removed to secondarily select the defective product.

In some embodiments, the inspection step may include performing a vision inspection on the plurality of electrode plates each having the at least one substrate tab to compare dimensions of the at least one substrate tab with a preset substrate tab dimension range or to determine the presence of foreign matter.

In some embodiments, the marking step may include removing the portion of the at least one substrate tab of the electrode plate that has been primarily selected as the defective product by laser cutting.

In some embodiments, the marking step may include removing the portion of the at least one substrate tab of the electrode plate that has been primarily selected as the defective product by die cutting.

In some embodiments, the method may further include: a suction step including suctioning the portion of the at least one substrate tab that was removed in the making step (e.g., suctioning the removed portion of the substrate tab after the marking step).

In some embodiments, the method may further include or the final inspection step may include a cutting step of cutting the electrode plates into sheets and a stacking step of stacking the sheets.

In some embodiments, the final inspection step may include: selecting the electrode plate from which the portion of the at least one substrate tab has been removed by irradiating each electrode plate of the plurality of electrode plates with light using an optical sensor before the cutting step, and secondarily selecting the electrode plate as the defective product in response to the number of substrate tabs of the electrode plate that have not been at least partially removed being less than the total number of substrate tabs of the electrode plate.

In some embodiments, the final inspection step may include: selecting the electrode plate from which the portion of the at least one substrate tab has been removed by comparing the size of at least one the substrate tab of each the electrode plate cut to be the sheet among the plurality of electrode plates with a preset substrate tab dimension range using a vision camera after the cutting step, and secondarily selecting the electrode plate as the defective product in response to the number of substrate tabs of the electrode plate within the preset substrate tab dimension range being less than the total number of substrate tabs of the electrode plate.

In some embodiments, the marking step may include removing approximately 5% to approximately 10% of a preset substrate tab length of the substrate tab.

In some embodiments, the marking step may include laser-cutting the entirety of an end or at least one corner of the at least one substrate tab.

In some embodiments, the marking step may include forming a notch in at least a part of the end of the at least one substrate tab.

In some embodiments, in the notching step, the electrode plates are unwound from a roll (e.g., unwound from a roll with a roll-to-roll driving unit) and provided on a roll-to-roll driving unit, and each electrode plate of the plurality of electrode plates may be notched on the roll-to-roll driving unit to form the at least one substrate tab. In some embodiments, in the inspection step and the marking step, the defective product may be primarily selected and marked from among the plurality of electrode plates each having the at least one substrate tab on the roll-to-roll driving unit, and in the final inspection step, the electrode plate (e.g., the electrode plate which was primarily selected as the defective product) may be secondarily selected at a back end of the roll-to-roll driving unit and the defective product may be discarded.

An apparatus for manufacturing an electrode assembly for a secondary battery according to an embodiment of the present disclosure to accomplish the above object includes a notching unit configured to notch at least one side of each electrode plate of a plurality of electrode plates for forming the electrode assembly for the secondary battery (e.g., two or more electrode plates to be included in the electrode assembly) to form at least one substrate tab on each electrode plate of the plurality of electrode plates, an inspection unit configured to primarily select a defective product from among the plurality of electrode plates each having the at least one substrate tabs, a tab marking unit configured to remove a portion of the at least one substrate tab of the electrode plate that has been primarily selected as the defective product, and a final defect inspection unit configured to detect the electrode plate from which the portion of the at least one substrate tab has been removed to secondarily select the defective product.

In some embodiments, the inspection unit may include a vision camera configured to perform vision inspection on the plurality of electrode plates each having the at least one substrate tab to compare dimensions of the at least one substrate tab with a preset substrate tab dimension range or to determine the presence of foreign matter.

In some embodiments, the tab marking unit may include at least one of a laser cutting portion and a die cutting portion, the laser cutting portion may be configured to remove the portion of the at least one substrate tab of the electrode plate that has been primarily selected as the defective product by laser cutting, the die cutting portion may be configured to remove the portion of the at least one substrate tab of the electrode plate that has been primarily selected as the defective product by die cutting.

In some embodiments, the apparatus may further include a suction unit configured to suction the portion of the at least one substrate tab that has been removed (or the removed portion of the substrate tab).

In some embodiments, the final defect inspection unit may include an optical sensor configured to irradiate the plurality of electrode plates with light in order to select the electrode plate from which the portion of the at least one substrate tab has been removed (or the electrode plate having the at least partially removed substrate tab) before cutting the plurality of electrode plates into sheets with an electrode plate cutting unit.

In some embodiments, the final defect inspection unit may include a vision camera configured to acquire an image of each electrode plate of the plurality of electrode plates in order to select the electrode plate from which the portion of the at least one substrate tab has been removed (or the electrode plate having the at least partially removed substrate tab) after cutting the plurality of electrode plates into sheets with an electrode plate cutting unit.

In some embodiments, the apparatus may further include a roll by a roll-to-roll driving unit through which the electrode plates may be unwound from a roll, the notching unit may be configured to cut each electrode plate of the plurality of electrode plates on the roll-to-roll driving unit to form the at least one substrate tab, the inspection unit may be configured to primarily select a defective product from among the plurality of electrode plates each having the at least one substrate tab (e.g., the notched substrate tabs) on the roll-to-roll driving unit, the tab marking unit may be configured to remove a portion of the at least one substrate tab of the electrode plate that has been primarily selected as the defective product, and the final defect inspection unit may be configured to secondarily select, at a back end of the roll-to-roll driving unit, the electrode plate that was primarily selected as the defective product and may discard the defective product.

### BRIEF DESCRIPTION OF THE DRAWINGS

The following drawings attached to this specification illustrate preferred embodiments of the present disclosure, and serve to further understand the technical idea of the present disclosure together with the detailed description of the present disclosure, and thus, the present disclosure should not be construed as being limited to the matters described in such drawings.
FIG. 1 is a flowchart illustrating an example of a method of manufacturing an electrode assembly for secondary batteries according to various embodiments of the present disclosure;
FIG. 2 is a schematic view showing an example of an apparatus for manufacturing an electrode assembly for secondary batteries according to various embodiments of the present disclosure;
FIG. 3 is a schematic view showing an example of a final defect inspection unit before cutting an electrode plate in the apparatus for manufacturing the electrode assembly for secondary batteries of FIG. 2;
FIG. 4 is a schematic view showing the final defect inspection unit of FIG. 3 after cutting the electrode plate in the apparatus for manufacturing the electrode assembly for secondary batteries of FIG. 2;
FIG. 5 is a perspective view showing an example of a pouch-shaped secondary battery according to various embodiments;
FIG. 6 is a perspective view showing a prismatic secondary battery according to various embodiments of the present disclosure;
FIG. 7 is a cross-sectional view taken along the line II-II in FIG. 6.
FIG. 8 is a perspective view illustrating an example of a battery module according to various embodiments of the present disclosure.
FIGS. 9 and 10 show an example of a battery pack according to various embodiments of the present disclosure.
FIGS. 11 and 12 show an example of a vehicle body and vehicle body parts having a battery pack according to various embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way. Therefore, the embodiments described in this specification and the configurations shown in the drawings are only some of the embodiments of the present disclosure and do not represent all of the technical aspects, and features of the present disclosure. Accordingly, it should be understood that there may be various equivalents and modifications that can replace or modify the embodiments described herein at the time of filing this application. In addition, it will be understood that the terms "comprise" or "include" and/or "comprising" or "including", when used in this specification, specify the presence of stated features, integers, steps, operations, elements, and/or components but do not preclude the presence or addition of one or more other features, integers, steps, operations, elements, components, and/or groups thereof. In addition, when describing embodiments of the present disclosure, the wording "may ~" or "may be~" may include "one or more embodiments of the present disclosure".

In addition, for a better understanding of the invention, the attached drawings are not drawn to scale and the dimensions of some components may be exaggerated. In addition, the same reference numbers may be assigned to the same components in different embodiments.

A reference to two objects in comparison being the same means that they are substantially the same. Thus, the wording "substantially the same" may include cases where the same is considered to be a low level in the related art, for example, a deviation within 5%. In addition, when any of parameters is referred to as being uniform in a given region, it may mean that the parameter is uniform from an average perspective.

It will be understood that, although the terms "first", "second", etc., may be used herein to describe various components, these components should not be limited by these terms. These terms are used to distinguish one component from another component. Thus, unless otherwise defined, a first component described below could be termed a second component, without departing from the spirit and scope of the present disclosure.

Throughout the specification, the singular forms are intended to include the plural forms as well, unless the context clearly indicates otherwise.

The arrangement of an arbitrary component on the "upper portion (or lower portion)" or "upper (or lower)" of a component means that an arbitrary component is placed in contact with the upper (or lower) surface of the component. In addition, it may mean that other components may be interposed between the component and any component disposed on (or under) the component.

Also, it will be understood that when an element is referred to as being "coupled to", "linked to", or "connected to" another element, these elements can be directly coupled or connected to each other, another intervening element may be present therebetween, or the respective elements may be coupled, linked, or connected to each other through another elements. In addition, it will be understood that when an element is referred to as being electrically coupled to another element, the element can be directly connected to another element or an intervening element may be present therebetween such that the element and another element are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

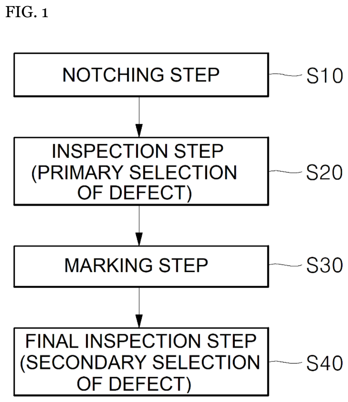

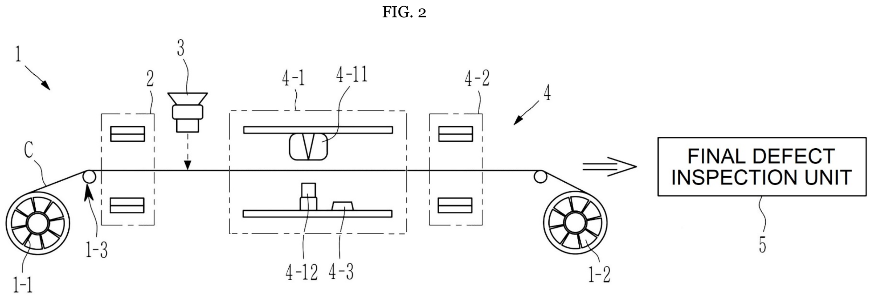

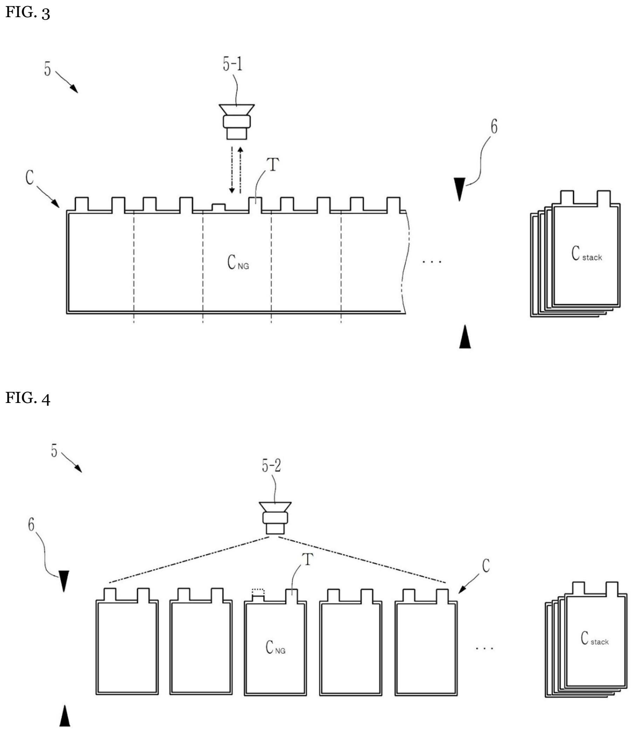

FIG. 1 is a flowchart illustrating an example of a method of manufacturing an electrode assembly for secondary batteries according to an embodiment of the present disclosure. FIG. 2 is a schematic view showing an apparatus 1 for manufacturing an electrode assembly for secondary batteries according to an embodiment of the present disclosure. FIG. 3 is a schematic view showing a final defect inspection unit 5 before cutting an electrode plate in the apparatus 1 for manufacturing the electrode assembly for secondary batteries of FIG. 2. FIG. 4 is a schematic view showing the final defect inspection unit 5 after cutting the electrode plate in the apparatus 1 for manufacturing the electrode assembly for secondary batteries of FIG. 2.

In manufacturing an electrode assembly for secondary batteries, a notching process may be performed to form a substrate tab (an uncoated portion of an electrode plate), and product defects in the notching process may be identified in a back-end process (e.g., individual electrode plate stacking). A semi-finished product may be marked as defective in the notching process using a method, such as punching, labeling, or laser marking. If the production speed is low, the method may easily achieve a marking level that may be easily identified and identified in a back-end process, but punching may be difficult in a high-speed process, and even if laser marking is performed, it may be difficult to clearly indicate failure (NG) because the amount of processing is insufficient compared to the movement speed of the electrode plate.

In some embodiments, the apparatus 1 for manufacturing the electrode assembly for secondary batteries may notch an electrode plate to form a substrate tab in a roll-to-roll (RTR) high-speed and continuous notching process (e.g., a process having a speed of approximately 80 m/min or more), may recognize defective products through vision inspection (e.g., detection of dimensions, foreign matter, etc.), and may cut a metal foil (tab portion) of the electrode plate using a cutting means such as a laser. In some embodiments, the apparatus 1 for manufacturing the electrode assembly for secondary batteries may determine whether there is a defect in the notching process based on the presence or absence of the substrate tab through visual sensing in a back-end process. In some embodiments, the apparatus 1 for manufacturing electrode assemblies for secondary batteries may clearly identify defective products and ensure a fast defect marking rate, and may contribute to an increase in the speed of the notching process.

In an embodiment, a method of inspecting defects of an electrode plate during the manufacture of an electrode assembly for secondary batteries by the apparatus 1 for manufacturing the electrode assembly for secondary batteries and an apparatus for inspecting defects of the electrode plate using the method will be described with reference to FIGs. 1 to 4.

In some embodiments, the method of manufacturing the electrode assembly for secondary batteries may include a notching step (S10), an inspection step (S20), a marking step (S30), and a final inspection step (S40). In some embodiments, the apparatus 1 for manufacturing an electrode assembly for secondary batteries may include a notching unit 2, an inspection unit 3, a tab marking unit 4, and a final defect inspection unit 5. In some embodiments, the apparatus 1 for manufacturing an electrode assembly for secondary batteries may further include an unwinder 1-1, a rewinder 1-2, a roll-to-roll driving unit 1-3, and an electrode plate cutting unit 6 (shown in FIG. 3).

In the notching step (S10), at least one side of an electrode plate C (e.g., each of a plurality of electrode plates C to be included in or for forming the electrode assembly for secondary batteries) may be cut to form at least one substrate tab T. The notching step (S10) may include notching (or cutting) at least one side of each of a plurality of electrode plates C to form at least one substrate tab T on each of the plurality of electrode plates C. The notching unit 2 may be configured to notch (or cut) at least one side of each of a plurality of electrode plates C to form at least one substrate tab T on each of the plurality of electrode plates C. In some embodiments, the substrate tab T may be formed by cutting at least one side of an uncoated portion of the electrode plate C, which is not coated with an active material.

In some embodiments, the unwinder 1-1 may unwind the electrode plate C (with the substrate tab T not notched) from a wound state. In some embodiments, the rewinder 1-2 may rewind the electrode plate C after marking the substrate tab T to indicate that the electrode plate is a defective product. In some embodiments, the roll-to-roll driving unit 1-3 may be driven such that the electrode plate in an unrolled state is introduced, processed, and discharged as an unroll product from the unwinder 1-1 to the rewinder 1-2. In some embodiments, the roll-to-roll driving unit 1-3 may be driven at a speed of, for example, approximately 80 m/min or more.

In some embodiments, in the notching step (S10), the electrode plate C without the notched substrate tab T in the notching step (S10) may be unwound from the unwinder 1-1 and may be provided to the roll-to-roll driving unit 1-3. In some embodiments, in the notching step (S10), each of the plurality of electrode plates C may be notched on the roll-to-roll driving unit 1-3 to form the at least one substrate tab T. In some embodiments, the notching unit 2 may be configured to notch each of the plurality of electrode plates C on the roll-to-roll driving unit 1-3 to form the substrate tab T. The protruding length, width, and number of the substrate tab T may be preset. In some embodiments, the substrate tabs T may be provided in pairs (i.e., two substrate tabs T), but more than two substrate tabs may be provided depending on the embodiment. In some embodiments, the notching unit 2 may be configured to bend or cut the uncoated portion of the electrode plate according to a designed pattern using precision notching equipment. For example, the notching unit 2 may perform laser notching, mechanical notching, etc.

In some embodiments, the substrate tab(s) T of the electrode plate C may be formed using a laser cutting machine, a water jet cutting machine, a mechanical cutting machine, etc. In some embodiments, a negative electrode plate and a positive electrode plate may be collectively referred to as an electrode plate, and a description of the electrode plate may be applicable to both the negative electrode plate and the positive electrode plate.

In the inspection step (S20), the inspection unit 3 may be configured to select (or detect) defective products C_{NG} from among the plurality of electrode plates C each having the notched substrate tabs T. The inspection step (S20) may be a primary defect detection (or selection) step. The inspection unit 3 may be configured to primarily select a defective product C_{NG} from among the plurality of electrode plates C each having the at least one substrate tab T. In some embodiments, the inspection unit 3 may be configured to perform a vision inspection (e.g., visual inspection) on the electrode plate C having the notched substrate tabs T and to compare the dimensions of the notched substrate tab T with a preset substrate tab dimension range (e.g., a range of suitable tab dimensions) and/or to determine the presence of foreign matter. In some embodiments, the vision inspection may include laser vision inspection, a vision camera system, machine learning, and/or artificial intelligence. Laser vision inspection may be configured to scan the surfaces of the electrode plate C and the substrate tab T using a laser, and may analyze the reflected laser light to perform precise dimension measurement and defect detection. The vision camera system may be configured to capture images of the electrode plate C and the substrate tab T using at least one camera, and may perform more accurate inspection through analysis. Machine learning and artificial intelligence may enable more sophisticated defect detection by learning complex defect patterns through a machine learning algorithm and constructing prediction models.

In the marking step (S30), at least a part of the substrate tab T of the electrode plate C that has been selected as a defective product in the inspection step (S20) may be removed. The marking step (S30) may include removing a portion of the at least one substrate tab T of an electrode plate C that has been primarily selected as the defective product C_{NG} the inspection step (S20). The tab marking unit 4 may be configured to remove a part of one of one or more substrate tabs T of the selected electrode plate C (or a portion of the at least one substrate tab T of an electrode plate C that has been primarily selected as the defective product C_{NG} by the inspection unit 3). In one or more embodiments, the tab marking unit 4 may remove a part of one substrate tabs T even if the number of the substrate tabs of the electrode plate C is 2, 3, or 4.

In some embodiments, the tab marking unit 4 may include a laser cutting portion 4-1 and a die cutting portion 4-2.

The laser cutting portion 4-1 may remove a part of the substrate tab T of the selected electrode plate C by laser cutting. The laser cutting portion 4-1 may include a laser scanner 4-11 and a beam dump 4-12. For example, the laser scanner 4-11 may include a pulse scanner laser and a laser oscillator. The pulse scanner laser may generate a high-intensity laser pulse for a short period of time and may precisely aim the laser at a specific position through a scanning system. The laser oscillator, which may be an apparatus that generates laser light, may include an active medium, a cavity, and a pumping source. The oscillator may emit consistent laser light through optical amplification and resonance.

The beam dump 4-12 may be an apparatus that effectively absorbs and extinguishes unnecessary beams generated by a laser system. A laser beam may have high-energy intensity, and if not properly managed, problems such as equipment damage, safety incidents, and environmental pollution may occur. The beam dump 4-12 may eliminate (or at least mitigate) such risks and support the stable operation of the laser system. Unnecessary beams generated by the laser system may be guided to the beam dump 4-12 using an optical mirror, lens, or other optical element. The beam dump 4-12 may be made of a material that can absorb the energy of the laser beam, such as a black material or a highly absorbent material. The beam dump 4-12 may be designed to effectively dissipate heat converted from the absorbed energy. The beam dump 4-12 may completely (or substantially completely) extinguish the laser beam to prevent (or at least mitigate) damage to surrounding equipment or the human body.

In some embodiments, the die cutting portion 4-2 may be configured to remove a part of the substrate tab T of the selected electrode plate C by die cutting. The die cutting portion 4-2 may cut the substrate tab T into a desired shape using a die, thereby enabling high-speed production and maintaining consistent quality.

In some embodiments, the tab marking unit 4 may further include a suction portion 4-3 or the apparatus 1 may further include a suction unit, the suction portion 4-3 or the suction unit may be configured to suction the removed part of the substrate tab T (or the portion of the at least one substrate tab T of the electrode plate C primarily selected as the defective product C_{NG} by the inspection unit 3 that has been removed by the tab marking unit 4) to prevent (or at least mitigate) the removed part of the substrate tab T from being introduced into a back-end process. The suction portion 4-3 or the suction unit may include a mechanism for suction and a dust collector, and may include, for example, a scrap suction portion. In some embodiments, the mechanism may include a suction nozzle, a suction pipe, and a pump. The suction nozzle may be located near the laser cutting portion 4-1 or the die cutting portion 4-2 to directly suction the residue generated during cutting. The position and size of the nozzle may be configured according to the shape and position of the laser cutting portion 4-1 and/or the die cutting portion 4-2. The suction pipe may be a pipe configured to connect the suction nozzle and the dust collector to each other, may be designed in consideration of flexibility and durability, and may allow for efficient movement of the residue. The pump may be an apparatus for continuously suctioning in the residue generated in the process, and may maintain constant (or substantially constant) suction force such that the residue is effectively removed. The dust collector may include a filter system, a collection bin, a heat sink, and a cooling system. The filter system may include a filter configured to effectively filter the residue, may have a high-efficiency fine dust removal ability, and may be configured for easy periodic replacement. The collection bin may be a bin where the residue that has passed through the filter is collected. In some embodiments, in the laser cutting process that generates high heat, a heat sink or a cooling system configured to effectively dissipate the heat generated in the dust collector may be included. Accordingly, the method may further include a suction step, the suction step may include suctioning the portion of the at least one substrate tab T of the electrode plate C primarily selected as the defective product C_{NG} in the inspection step (S20) that was removed in the marking step (S30).

In some embodiments, the laser cut portion 4-1 or the die cut portion 4-2 may remove at least a part of the substrate tab, such as in a range from approximately 5% to approximately 10% of a preset substrate tab length. If at least a part of the substrate tab is removed by less than approximately 5% of the preset substrate tab length, it may be difficult to detect the removed part of the tab in a back-end process. If at least a part of the substrate tab is removed by more than approximately 10% of the preset substrate tab length, the tab may be cut excessively, and it may be difficult to respond to various variables that may occur during the process.

In some embodiments, the laser cutting portion 4-1 may laser-cut the entirety of an end or at least one of the corners of the substrate tab T. In some embodiments, the die cutting portion 4-2 may form a notch in at least a part of the end of the substrate tab. For example, the shape of the cut part may be formed as a straight line, curve, circle, or square.

In the final inspection step (S40), which may be a back-end process (e.g., at a back end of the roll-to-roll driving unit 1-3), the electrode plate C from which at least a part of the substrate tab T has been removed in the marking step (S30) may be detected to secondarily select defective products. The final inspection step (S40) may include detecting the electrode plate C from which the portion of the at least one substrate tab T has been removed to secondarily select (e.g., secondarily select at a back end of the roll-to-roll driving unit 1-3) the defective product C_{NG}. The final defect inspection unit 5 may be configured to detect the electrode plate C from which the portion of the at least one substrate tab T has been removed to secondarily select (e.g., secondarily select at a back end of the roll-to-roll driving unit 1-3) the defective product C_{NG}. The final defect inspection unit 5 may secondarily select the electrode plate C unwound from a roll on which the electrode plate C from which the defective product C_{NG} was primarily selected has been wound, and then discard the defective product C_{NG}. In some embodiments, the final defect inspection unit 5 may be configured to determine that the product (e.g., the electrode plate C) is a defective product C_{NG} and discard the product if the number of substrate tabs T (e.g., the substrate tabs that have not been at least partially removed or the substrate tabs within the preset substrate tab dimension range) detected is 0 or 1 according to control logic. In some embodiments, if the preset total number of substrate tabs is three, the product may be determined as defective and discarded if the number of substrate tabs detected T is 0, 1, or 2. In some embodiments, the final defect inspection unit 5 may be configured to determine that the product is defective and discarded if the number of substrate tabs detected T (e.g., the substrate tabs that have not been at least partially removed or the substrate tabs within the preset substrate tab dimension range) is less than the preset total number of substrate tabs.

In some embodiments, in the back-end process including the final inspection step (S40) for determining defective products C_{NG}, the electrode plate C may be cut into sheets through the electrode plate cutting unit 6, and the cut sheets of the electrode plate C may be stacked to form a stacked electrode plate C_{stack}.

In some embodiments, the final defect inspection unit 5 may include an optical sensor 5-1 and/or a vision camera 5-2.

Referring to FIG. 3, the final defect inspection unit 5 may be configured to select the electrode plate C primarily selected as the defective product C_{NG} from which at least a part of the substrate tab T has been removed (in the marking step (S30)) by irradiating the electrode plate C with light using the optical sensor 5-1 before cutting the electrode plate C through the electrode plate cutting unit 6. In one or more embodiments, in response to the number of substrate tabs of the electrode plate that have not been at least partially removed being less than the preset number of substrate tabs, the final defect inspection unit 5 may secondarily select the electrode plate C as a defective product.

The final defect inspection unit 5 may be configured to selectively identify the electrode plate C primarily selected as the defective product C_{NG} from which at least a part of the substrate tab T has been removed by precisely irradiating the electrode plate C with light using the high-performance optical sensor 5-1 before cutting the electrode plate C through the electrode plate cutting unit 6, and at the same time, in response to the number of the substrate tabs of the electrode plate that have not been partially removed being less than the total preset number of substrate tabs, may automatically secondarily select the electrode plate from which a part of the substrate tab has been removed as a defective product and exclude the same from the production line, thereby improving the quality and reliability of the final product. In this process, the optical sensor 5-1 may precisely detect the removal of the substrate tab T by irradiating the electrode plate C with high-resolution light and analyzing the reflected signal, thereby evaluating in real time whether the substrate tab T has been partially removed (e.g., cut). If the number of the substrate tabs of the electrode plate that have not been partially removed is less than the preset number of substrate tabs, this may be quickly detected, and the electrode plate may be classified as defective. This automated inspection and selection system may minimize (or at least reduce) errors and may enable consistent quality control, greatly improving the efficiency of the entire manufacturing process and the reliability of the final product. Precise inspection using the optical sensor 5-1 may prevent (or at least mitigate) defects that may occur in the back-end process. As a result, the final defect inspection unit 5 may act as an element for thorough management of all steps of the electrode plate notching process and the stable production of high-quality battery products using advanced optical sensor technology.

The optical sensor 5-1, which may be a core apparatus that detects the presence of a normal substrate tab T by irradiating the electrode plate C with light in the final defect inspection unit 5, may irradiate the surface of the electrode plate with light through a high-resolution light source, may detect the reflected light, and may analyze the removal state of the substrate tab (i.e., whether a portion of the substrate tab has been removed) in real time. The optical sensor 5-1 may emit light of a constant (or substantially constant) wavelength using a stable light source such as a laser or an LED, and the reflected light may be collected through a photodetector such as a photodiode or a CCD sensor. The collected optical signal may be converted into digital data by a signal processing unit, and the dimensions of the substrate tab, such as the length, width, and thickness, and whether at least a part of the substrate tab has been removed may be precisely analyzed utilizing a software algorithm. The optical sensor 5-1 may maintain high accuracy and repeatability without physical damage by inspecting the electrode plate in a non-contact manner, and may be readily integrated into automated process flows so as to operate efficiently even in mass production environments. The optical sensor 5-1 may be designed in consideration of various lighting conditions and reflective characteristics, and may be highly durable against environmental changes, thereby contributing to improvement in the reliability of the manufacturing process.

The final defect inspection unit 5 may be configured to select the electrode plate C primarily selected as the defective product C_{NG} from which at least a part of the substrate tab has been removed by comparing the size of the substrate tab T of each sheet of the electrode plate C with the preset substrate tab dimension range using the vision camera 5-2 after cutting the electrode plate C through the electrode plate cutting unit 6, and in response to the number of substrate tabs of each sheet of the electrode plate that are within the preset substrate tab dimension range being less than the total preset number of substrate tabs, may secondarily select the electrode plate as a defective product.

In some embodiments, the final defect inspection unit 5 may effectively select an electrode plate C primarily selected as the defective product C_{NG} from which at least a part of the substrate tab has been removed by comparing and analyzing the size of the substrate tab T of each sheet of the electrode plate C with the preset substrate tab dimension range using the high-resolution vision camera 5-2 after cutting the electrode plate C through the electrode plate cutting unit 6, and in response to the number of substrate tabs of each sheet of the electrode plate that are within the preset substrate tab dimension range being less than the total preset number of substrate tabs, may secondarily select the electrode plate as a defective product and may block introduction of that defective electrode plate to the next step of the production line, thereby maximizing (or at least increasing) quality control of the entire manufacturing process and the reliability of the final product, thereby increasing manufacturing efficiency and enabling consistent production of high-quality electrode plates. In this process, the vision camera 5-2 may measure the exact dimensions of the substrate tab using high-speed data processing and precise image analysis technology, and may determine whether the measured dimensions match (or substantially match) the dimensions for comparison in real time, thereby minimizing (or at least reducing) the defect rate. The automated inspection system may reduce human error and may increase inspection speed, thereby enabling stable and efficient quality control even in mass production environments. As a result, the final defect inspection unit 5 may thoroughly monitor and manage all steps of the electrode plate cutting process using integrated advanced vision inspection technology, thereby acting as an element to improve the overall quality and productivity of the battery manufacturing process and ensure the performance and safety of the final product.

In some embodiments, vision inspection may be performed based on the vision camera 5-2 to select final defective products. Vision inspection may be technology that automatically inspects the quality of products by collecting and analyzing visual data in the manufacturing process. Vision inspection may play an important role during the battery manufacturing process, e.g., during the formation of the substrate tab of the electrode plate, and may perform dimensional comparison between the substrate tabs.

Vision inspection may be implemented by a system that automatically inspects the surface, shape, and dimensions of products using a camera and image processing software, and this may enable faster and more consistent quality control than visual examination by a human, and may thereby contribute to improving the efficiency of the manufacturing process and the reliability of products by filtering out defective products in advance (i.e., prior to advancing to a subsequent step in the manufacturing process).

Vision inspection may be implemented using a camera, lighting, image processing software, a computer, hardware, an interface, and a communication device. Image processing software may analyze captured images to perform dimensional measurement, pattern recognition, defect detection, etc. The computer and hardware may be configured to perform image processing in real time and be equipped with computing power and a storage device for storing and analyzing inspection results. The interface and communication device may be linked to the manufacturing process to transmit inspection data in real-time and may be integrated with a process control system.

In some embodiments, vision inspection may capture an image of the notched electrode plate C and the substrate tab T using a high-resolution camera, and the captured image may be preprocessed to remove noise, enhance contrast, correct color, etc. to make the captured image suitable for analysis. Vision inspection may extract important features from the image to identify the dimensions, shape, and position of the substrate tab, and may compare the extracted features to the preset substrate tab dimension range. Vision inspection may determine whether the inspection result is OK (acceptable) or NG (unacceptable), and may provide feedback to the manufacturing process if necessary. For example, the length, width, and thickness of the notched substrate tab may be precisely measured through vision inspection, and whether the dimensions match (or substantially match) the design specifications may be checked.

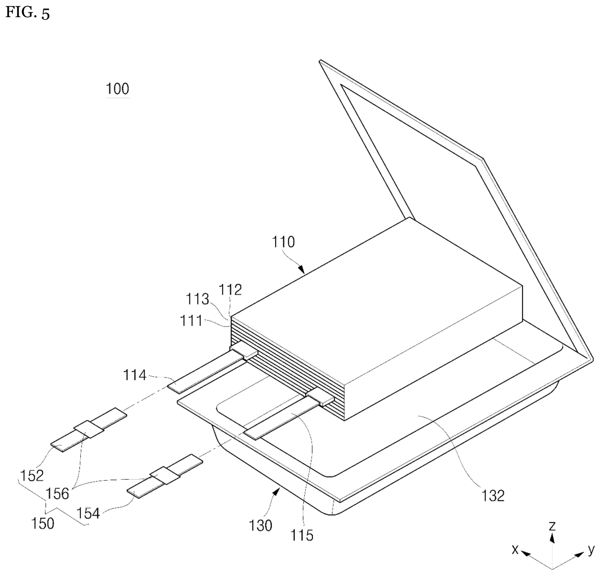

FIG. 5 is a perspective view showing a pouch-shaped secondary battery according to various embodiments of the present disclosure.

As shown in FIG. 5, the secondary battery 100 includes an electrode assembly 110 and a pouch 130 accommodating the electrode assembly 110.

The electrode assembly 110 includes a first electrode plate as a negative electrode plate 111, a second electrode plate as a positive electrode plate 112, and a separator 113 interposed therebetween. In some embodiments, an electrode assembly may be provided by stacking a negative electrode plate 111, a separator 113, and a positive electrode plate 112, each of which is provided in a thin plate shape or film shape. In some embodiments, one or more electrode assemblies 110 may be stacked such that the electrode assemblies 110 are adjacent to each other and accommodated in the pouch 130, and the number of electrode assemblies 110 is not limited in the present disclosure. The first electrode plate (e.g., the negative electrode plate 111) of the electrode assembly 110 may function as a negative electrode, and the second electrode plate (e.g., the positive electrode plate 112) may function as a positive electrode. In one or more embodiments, the first electrode plate 111 of the electrode assembly 110 may act as a positive electrode, and the second electrode plate 112 may act as a negative electrode.

The negative electrode plate 111 may be formed by applying a first electrode active material, such as graphite or carbon, to a first electrode current collector formed of a metal foil, such as copper, a copper alloy, nickel, or a nickel alloy. The negative electrode plate 111 may include a first electrode active material layer that is a region to which the first electrode active material is applied. The negative electrode plate 111 may include a first uncoated portion that is a region to which the first electrode active material is not applied.

The negative electrode plate 111 may include a negative electrode tab 114 electrically connected to the first uncoated portion. In some embodiments, negative electrode tab 114 may be fixed (e.g., welded) to a negative electrode non-coating portion in a generally flat shape. For example, the negative electrode tabs 114 may be fixed to the negative electrode non-coating portion by ultrasonic welding, laser welding, or resistance welding. That is, one end of the negative electrode tab 114 may be electrically connected to the negative electrode non-coating portion, and the other end may protrude and extend to the outside. In some embodiments, when the negative electrode plate 111 is manufactured, the negative electrode tab 114 may be formed by being cut in advance to protrude to one side of the electrode assembly 110, or the negative electrode tab 114 may protrude to one side of the electrode assembly 110 more than (e.g., farther than or beyond) the separator 113 without being separately cut.

The negative electrode active material, which is the first active material may include a material capable of reversibly intercalating/deintercalating lithium ions, lithium metal, an alloy of lithium metal, a material capable of being doped and dedoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and dedoped with lithium. The Si-based negative electrode active material may be silicon, a silicon-carbon composite, SiOx (0 < x ≤ 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

The positive electrode plate 112 may be formed by applying a second electrode active material, such as a transition metal oxide, on a second electrode current collector formed of a metal foil, such as aluminum or an aluminum alloy. The positive electrode plate 112 may include a second electrode active material layer that is a region to which the second electrode active material is applied. The positive electrode plate 112 may include a second uncoated portion that is a region to which the second electrode active material is not applied.

The positive electrode plate 112 may include a positive electrode tab 115 electrically connected to the second uncoated portion. In some embodiments, the positive electrode tabs 115 may be fixed (e.g., welded) to a positive electrode non-coating portion in a generally flat shape. For example, the positive electrode tabs 115 may be fixed to the positive electrode non-coating portion by ultrasonic welding, laser welding, or resistance welding. That is, one end of the positive electrode tab 115 may be electrically connected to the positive electrode non-coating portion, and the other end may protrude and extend to the outside. In some embodiments, when the positive electrode plate 112 is manufactured, the positive electrode tab 115 may be formed by being cut in advance to protrude to one side of the electrode assembly 110, or the positive electrode tab 115 may protrude to one side of the electrode assembly 110 more than (e.g., farther than or beyond) the separator 113 without being separately cut.

As the positive electrode active material, which is the second active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA₁₋₃X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-3-c}Co₃X_{c}O_{2-α}D_{α} (0.90≤a≤1.8, 0≤b≤0.5, 0≤c≤ 0.5, 0<α<2); LiₐNi_{1-3-c}Mn₃X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a ≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤ 0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

In some embodiments, electrode leads 150 may be provided to electrically connect the negative electrode tabs 114 and the positive electrode tab 115 to the outside. The negative electrode tab 114 and the positive electrode tab 115 are respectively welded to a negative electrode lead 152 and a positive electrode lead 154 of an external terminal to be electrically connected to the outside. A tab film 156 for insulation from the pouch 130 is attached to the negative electrode lead 152 and the positive electrode lead 154. A pouch 130 may also be referred to as a case.

The separator 113 may be interposed between the negative electrode plate 111 and the positive electrode plate 112 to prevent electrical short-circuit between the negative electrode plate 111 and the positive electrode plate 112. In some embodiments, the separator 113 are provided in a pair, and the negative electrode plate 111 may be sandwiched between the pair of separators 113.

Depending on the type of lithium secondary battery, the separator 113 may be present between the first electrode plate (e.g., the negative electrode) and the second electrode plate (e.g., the positive electrode). As the separator 113, polyethylene, polypropylene, polyvinylidene fluoride, or a multilayer film of two or more layers thereof may be used.

The separator 113 may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃) Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

In a state in which the electrode assembly 110 is accommodated in the pouch 130, sealing parts 132 of edges of the pouch 130 come into contact with each other (e.g., the sealing parts 132 around the periphery of the bottom portion of the pouch 130 come into contact with a corresponding peripheral area of the top potion (e.g., a cover) of the pouch 130) to be sealed. The sealing is performed in a state in which the tab film 156 is disposed between the sealing parts 132. As shown in FIG. 1, the form in which the tab film 156 is attached to each of the negative electrode tab 114a and 114b and the positive electrode tab 115a and 115b is defined as a "separable tab film" (e.g., this sealing structure is referred to as a separable sealing structure).

The sealing parts 132 at the bottom portion of the pouch 130 as well as the top portion (e.g., the entire cover or at least the peripheral area of the cover) may be made of a heat-fusible material and may have a structure in which sealing is achieved by bonding heat-fusible layers to each other. Because the heat-fusible material generally has weak adhesion to metal, the tab film 156 in the form of a thin film is attached to a tab to be fused to the pouch 130. However, in the separable sealing structure, the tab film 156 is attached to the negative electrode lead 152 and the positive electrode lead 154 and then welded thereto, followed by being heat-fused with the pouch 130, and thus, workability and productivity may be improved. The pouch 130 may have an internal space and may accommodate the electrode assembly 110 in the internal space.

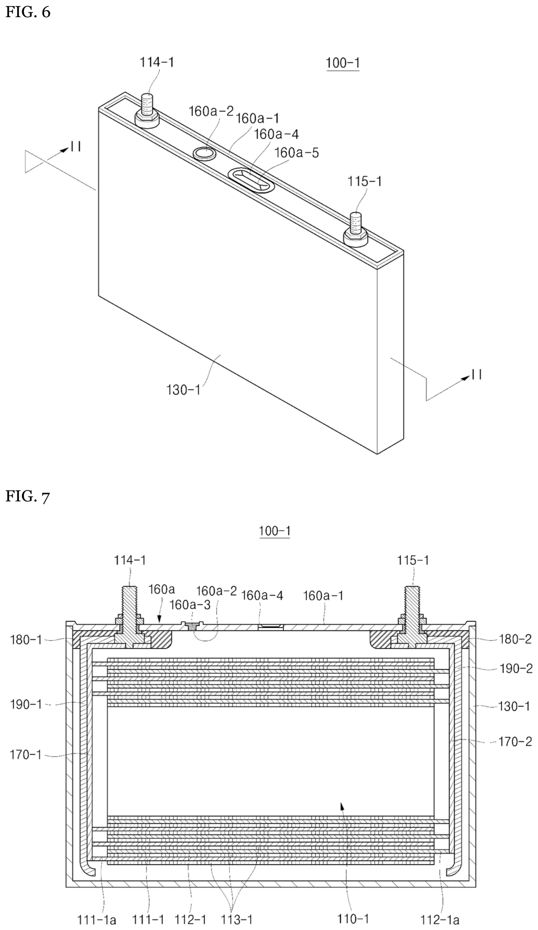

FIG. 6 is a perspective view showing a prismatic secondary battery according to various embodiments of the present disclosure. FIG. 7 is a cross-sectional view taken along the line II-II in FIG. 6.

Referring to FIGS. 6 and 7, the secondary battery 100-1 according to one or more embodiments of the present disclosure may include at least one electrode assembly 110-1 wound with a separator 113-1 as an insulator between the negative electrode 111-1 and the positive electrode 112-1, a case 130-1 in which the electrode assembly 110-1 is received (or accommodated) therein, and a cap assembly 160a coupled to an opening of the case 130-1.

The secondary battery 100-1 according to one or more embodiments will now be described as an example of a prismatic lithium ion secondary battery. However, the present disclosure is not limited thereto, and suitable aspects, features and principles described herein may be applied to various other types of batteries, such as lithium polymer batteries and/or cylindrical batteries.

Each of the negative electrode 111-1 and the positive electrode 112-1 may include a current collector made of a thin metal foil having a coated portion on which an active material is coated and an uncoated portion 111-1a, 112-1a on which an active material is not coated.

The negative electrode 111-1 and the positive electrode 112-1 are wound after interposing the separator 113-1, which is an insulator, therebetween. However, the present disclosure is not limited thereto, and the electrode assembly 110-1 may have a structure in which the negative electrode 111-1 and the positive electrode 112-1, each made of a plurality of sheets, are alternately stacked with a separator interposed therebetween.

The case 130-1 may form the overall outer appearance of the secondary battery 100-1 and may be made of a conductive metal, such as aluminum, aluminum alloy, or nickel-plated steel. In addition, the case 2 may provide a space in which the electrode assembly 110-1 is accommodated.

The cap assembly 160a may include a cap plate 160a-1 covering an opening in the case 130-1, and the case 130-1 and the cap plate 160a-1 may be made of a conductive material. The negative electrode terminal 114-1 and the positive terminal 115-1 electrically connected to the negative electrode 111-1 and the positive electrode 112-1, respectively, may be installed to penetrate (or extend through) the cap plate 160a-1 and protrude outwardly therethrough.

In addition, outer peripheral surfaces (e.g., circumferential surfaces) of upper pillars of the negative and positive electrode terminals 114-1 and 115-1 protruding outwardly from the cap plate 3-1 may be threaded and may be fixed to the cap plate 160a-1 by utilizing nuts.

However, the present disclosure is not limited thereto, and the negative and positive electrode terminals 114-1 and 115-1 may have a rivet structure and may be riveted or welded to the cap plate 160a-1.

In addition, the cap plate 160a-1 may be made of a thin plate and may be coupled to the opening in the case 160-1, and an electrolyte injection port 160a-2 into which a sealing stopper 160a-3 may be installed may be located (e.g., formed) in the cap plate 160a-1, and a vent portion 160a-4 having a notch 160a-5 may be installed.

The negative and positive electrode terminals 114-1 and 115-1 may be electrically connected to current collectors including first and second current collectors 170-1 and 170-2 (hereinafter referred to as positive and negative current collectors) by being bonded or coupled (e.g., by welding) to the negative uncoated portion 112-1a and the positive electrode uncoated portion 111-1a, respectively.

For example, the negative and positive electrode terminals 114-1 and 115-1 may be coupled by welding to the negative and positive electrode current collectors 170-1 and 170-2, respectively. However, the present disclosure is not limited thereto, and the negative and positive electrode terminals 114-1 and 115-1 and the negative and positive electrode current collectors 170-1 and 170-2 may be integrally formed in one or more embodiments.

In addition, an insulation member may be installed between the electrode assembly 110-1 and the cap plate 160a-1. The insulation member may include first and second lower insulation members 180-1 and 180-2, and each of the first and second lower insulation members 180-1 and 180-2 may also have a portion located between the electrode assembly 110-1 and the cap plate 160a-1.

In addition, according to one or more embodiments of the present disclosure, one end of a separation member may face one side of the electrode assembly 110-1 and may be installed between the insulation member and the negative or positive electrode terminals 114-1 and 115-1.

In one or more embodiments, the separation member may include first and second separation members 190-1 and 190-2.

In such an embodiment, first ends of the first and second separation members 190-1 and 190-2 installed to face one side of the electrode assembly 110-1 may be respectively installed between the first and second lower insulation members 180-1 and 180-2 and the negative and positive electrode terminals 114-1 and 115-1.

Accordingly, the negative and positive electrode terminals 114-1 and 115-1, which may be coupled by welding to the negative and positive electrode current collectors 170-1 and 170-2, may be coupled to the first and second lower insulation members 180-1 and 180-2 and first ends of the first and second separation members 190-1 and 190-2.

A battery pack according to one or more embodiments includes at least one battery module and a pack housing having an accommodation space in which the at least one battery module is accommodated.

The battery module may include a plurality of battery cells and a module housing. The battery cells may be accommodated inside the module housing in a stacked form (or stacked arrangement or configuration). Each battery cell may have a positive electrode terminal and a negative electrode terminal and may be a circular type, a prismatic type, or a pouch type according to the shape of battery. In the present specification, a battery cell may also be referred to as a secondary battery, a battery, or a cell.

In the battery pack, one cell stack may constitute one module stacked in place of the battery module. The cell stack may be accommodated in an accommodation space of the pack housing or may be accommodated in an accommodation space partitioned by a frame, a partition wall, etc.

The battery cell may generate a large amount of heat during charging/discharging. The generated heat may be accumulated in the battery cell, thereby accelerating the deterioration of the battery cell. Accordingly, the battery pack may further include a cooling member to remove the generated heat and thereby suppress deterioration of the battery cell. The cooling member may be provided at the bottom of the accommodation space at where the battery cell is provided but is not limited thereto and may be provided at the top or side depending on the battery pack.

The battery cell may be configured such that exhaust gas generated inside the battery cell under abnormal operating conditions, also known as thermal runaway or thermal events, is discharged to the outside of the battery cell. The battery pack or the battery module may include an exhaust port for discharging the exhaust gas to prevent or reduce damage to the battery pack or module by the exhaust gas.

The battery pack may include a battery and a battery management system (BMS) for managing the battery. The battery management system may include a detection device, a balancing device, and a control device. The battery module may include a plurality of cells connected to each other in series and/or parallel. The battery modules may be connected to each other in series and/or in parallel.

The detection device may detect a state of a battery (e.g., voltage, current, temperature, etc.) to output state information indicating the state of the battery. The detection device may detect the voltage of each cell constituting the battery or of each battery module. The detection device may detect current flowing through each battery module constituting the battery module or the battery pack. The detection device may also detect the temperature of a cell and/or module on at least one point of the battery and/or an ambient temperature.

The balancing device may perform a balancing operation of a battery module and/or cells constituting the battery module. The control device may receive state information (e.g., voltage, current, temperature, etc.) of the battery module from the detection device. The control device may monitor and calculate the state of the battery module (e.g., voltage, current, temperature, state of charge (SOC), life span (state of health (SOH)), etc.) on the basis of the state information received from the detection device. In addition, on the basis of the monitored state information, the control device may perform a control function (e.g., temperature control, balancing control, charge/discharge control, etc.) and a protection function (e.g., over-discharge, over-charge, over-current protection, short circuit, fire extinguishing function, etc.). In addition, the control device may perform a wired or wireless communication function with an external device of the battery pack (e.g., a higher level controller or vehicle, charger, power conversion system, etc.).

The control device may control charging/discharging operation and protection operation of the battery. To this end, the control device may include a charge/discharge control unit, a balancing control unit, and/or a protection unit.

The battery management system is a system that monitors the battery state and performs diagnosis and control, communication, and protection functions, and may calculate the charge/discharge state, calculate battery life or state of health (SOH), cut off, as necessary, battery power (e.g., relay control), control thermal management (e.g., cooling, heating, etc.), perform a high-voltage interlock function, and/or may detect and/or calculate insulation and short circuit conditions.

A relay may be a mechanical contactor that is turned on and off by the magnetic force of a coil or a semiconductor switch, such as a metal oxide semiconductor field effect transistor (MOSFET).

The relay control has a function of cutting off the power supply from the battery if (or when) a problem occurs in the vehicle and the battery system and may include one or more relays and pre-charge relays at the positive terminal and the negative terminal, respectively.

In the pre-charge control, there is a risk of inrush current occurring in the high-voltage capacitor on the input side of the inverter when the battery load is connected. Thus, to prevent inrush current when starting a vehicle, the pre-charge relay may be operated before connecting the main relay and the pre-charge resistor may be connected.

The high-voltage interlock is a circuit that uses a small signal to detect whether or not all high-voltage parts of the entire vehicle system are connected and may have a function of forcibly opening a relay if (or when) an opening occurs at even one location on the entire loop.

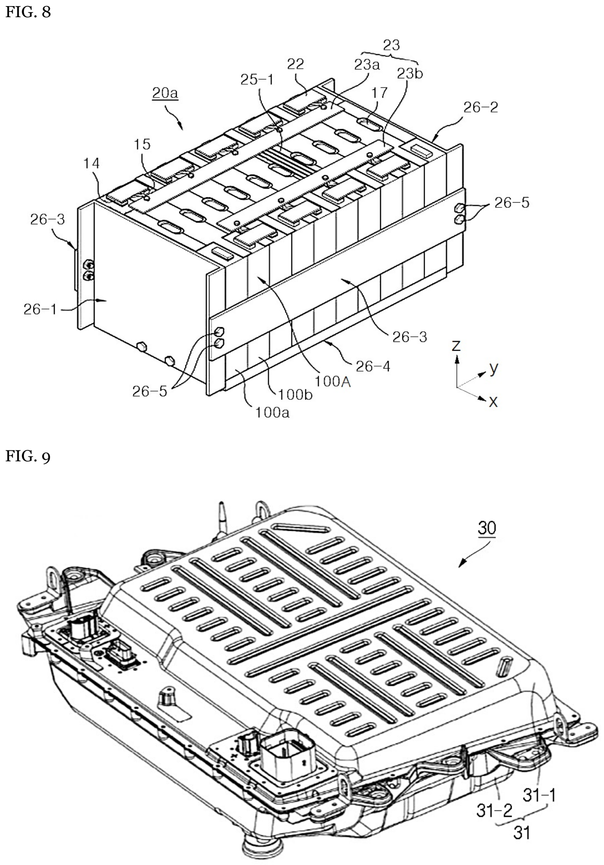

FIG. 8 is a perspective view illustrating a battery module 20a according to one or more embodiments of the present disclosure. Referring to FIG. 8, the battery module 20a according to one or more embodiments of the present disclosure includes terminal parts 14 and 15, a plurality of battery cells 100A arranged in one direction, a connection tab 22 connecting a battery cell 100a to an adjacent battery cell 100b, and a protection circuit module 23 having one end connected to the connection tab 22. The protection circuit module 23 may include a battery management system (BMS). Further, the connection tab 22 may include a body portion in contact with the terminal parts 14 and 15 between the adjacent battery cells 100a and 100b and an extension portion extending from the body portion and connected to the protection circuit module 23. The connection tab 22 may be, for example, a bus bar.

Each battery cell 100A may include a battery case, an electrode assembly received (or accommodated) in the battery case, and an electrolyte. The electrode assembly and the electrolyte react electrochemically to store and release (e.g., generate) energy. The terminal parts 14 and 15 electrically connected to the connection tab 22 and a vent 17 as a discharge passage for gas generated inside the battery case may be provided on one side of (e.g., an upper side of) the battery cell 100A. The terminal parts 14 and 15 of the battery cell 100A may be a positive electrode terminal 14 and a negative electrode terminal 15 having different polarities from each other, and the terminal parts 14 and 15 of the adjacent battery cells 100a and 100b may be electrically connected to each other in series or parallel by the connection tab 22, to be described in more detail below. Although a serial connection has been described as an example, the connection structure is not limited thereto, and various connection structures may be employed as desired or necessary. In addition, the number and arrangement of battery cells is not limited to the structure shown in FIG. 8 and may be changed as desired or necessary.

The plurality of battery cells 100A may be arranged in (e.g., may be stacked in) one direction so that the wide surfaces of the battery cells 100A face each other, and the plurality of battery cells 100A may be fixed by the housings 26-1, 26-2, 26-3, and 26-4. The housings may include a pair of end plates 26-1 and 26-2 facing the wide surfaces of the battery cell 100A and a side plate 26-3 and a bottom plate 26-4 connecting the pair of end plates 26-1 and 26-2 to each other. The side plate 26-3 may support side surfaces of the battery cells 100A, and the bottom plate 26-4 may support bottom surfaces of the battery cells 100A. In addition, the pair of end plates 26-1 and 26-2, the side plate 26-3 and the bottom plate 26-4 may be connected by bolts 26-5 and/or any other suitable fastening members and methods known to those of ordinary skill in the art.

The protection circuit module 23 may have electronic components and protection circuits mounted thereon and may be electrically connected to connection tabs 22, to be described in more detail later. The protection circuit module 23 includes a first protection circuit module 23a and a second protection circuit module 23b extending along the direction in which the plurality of battery cells 100A are arranged in different locations. The first protection circuit module 23a and the second protection circuit module 23b may be spaced from each other at a suitable interval (e.g., a predetermined interval) and arranged parallel to each other to be electrically connected to adjacent connection tabs 22, respectively. For example, the first protection circuit module 23a extends on one side of the upper portion of the plurality of battery cells 100A along the direction in which the plurality of battery cells 100A are arranged, and the second protection circuit module 23b extends to the other upper side of the plurality of battery cells 100A along the direction in which the plurality of battery cells 100A are arranged. The second protection circuit module 23b may be spaced from the first protection circuit module 23a at a suitable interval (e.g., a predetermined interval) with the vents 17 interposed therebetween but may be disposed parallel to the first protection circuit module 23a. As such, the two protection circuit modules are spaced from each other side-by-side along the direction in which the plurality of battery cells 100A are arranged, thereby reducing or minimizing the area of the printed circuit board (PCB) constituting the protection circuit module. By separately configuring the protection circuit module into two protection circuit modules, unnecessary protection circuit module (PCM) area can be reduced or minimized. In addition, the first protection circuit module 23a and the second protection circuit module 23b may be connected to each other by a conductive connection member 25-1. One side of the conductive connection member 25-1 is connected to the first protection circuit module 23a, and the other side thereof is connected to the second protection circuit module 23b so that the two protection circuit modules 23a and 23b can be electrically connected with each other.

The connection may be performed by any one of soldering, resistance welding, laser welding, projection welding and/or any other suitable connection methods known to those of ordinary skill in the art.

In addition, the connection member 25-1 may be, for example, an electric wire. In addition, the connection member 25-1 may be made of a material having elasticity or flexibility. By the connecting member 25-1, it may be possible to check and manage whether the voltage, temperature, and/or current of the plurality of battery cells 100A are normal. For example, the information received by the first protection circuit module from connection tabs adjacent to the first protection circuit module, such as voltage, current, and/or temperature, and the information received from connection tabs adjacent to the second protection circuit module, such as voltage, current, and/or temperature, may be integrated and managed by the protection circuit module through the connection member 25-1.

In addition, when the battery cell 100A swells, shocks may be absorbed by the elasticity or flexibility of the connection member 25-1, thereby preventing the first and second protection circuit modules 23a and 23b from being damaged.

In addition, the shape and structure of the connection member 25-1 is not limited to the shape and structure shown in FIG. 8.

As described above, because the protection circuit module 23 is provided as the first and second protection circuit modules 23a and 23b, the area of the PCB constituting the protection circuit module can be reduced or minimized, and the space inside the battery module can be secured, which improves work efficiency by facilitating a fastening work for connecting the connection tab 22 and the protection circuit module 23 and repair work if (or when) an abnormality is detected in the battery module.

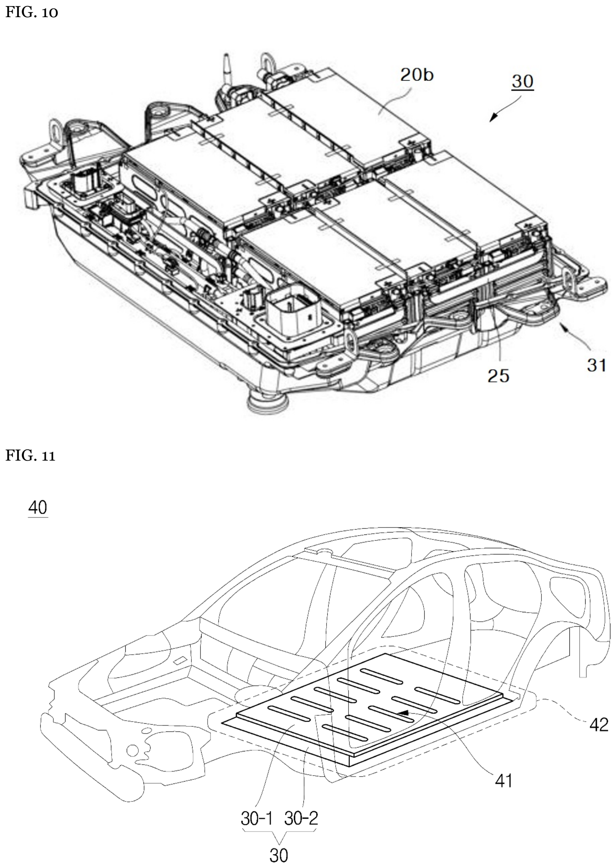

FIGS. 9 and 10 illustrate perspective views of an example of a battery pack 30 according to various embodiments of the present disclosure. The battery pack 30 may include a plurality of battery modules 20b and a housing 31 for accommodating the plurality of battery modules 20b. For example, the housing 31 may include first and second housings 31-1 and 31-2 coupled in opposite directions through the plurality of battery modules 20b. The plurality of battery modules 20b may be electrically connected to each other by using a bus bar 25-1, and the plurality of battery modules 20b may be electrically connected to each other in a series/parallel or series-parallel mixed method, thereby obtaining desired (e.g., required) electrical output.

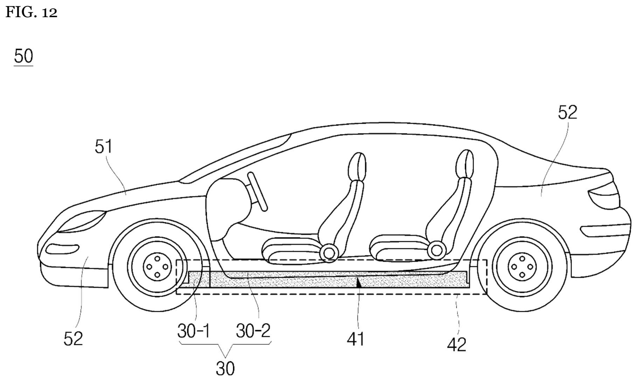

FIGS. 11 and 12 illustrate perspective and side views of examples of a vehicle body 40 and a vehicle components.

In FIG. 11, a battery pack 30 may include a battery pack cover 30-1, which is a part of a vehicle underbody 41, and a pack frame 30-2 located under the vehicle underbody 41. In some examples, the battery pack cover 30-1 may correspond to the first housing 31-1, and the pack frame 30-2 may correspond to the second housing 31-2. The pack frame 30-2 and the battery pack cover 30-1 may be integrally formed with a vehicle floor 42. The vehicle underbody 41 separates the inside and outside of a vehicle, and the pack frame 30-2 may be located outside the vehicle.

Referring to FIG. 12, a vehicle 50 may be formed by combining additional parts, such as a hood 51 in front of the vehicle and fenders 52 respectively located in the front and rear of the vehicle to a vehicle body 40.

The vehicle 50 may include the battery pack 30 that include the battery pack cover 30-1 and the pack frame 30-2, and the battery pack 30 may be coupled to the vehicle body 40.

As is apparent from the above description, according to embodiments of the present disclosure, at least a part of a substrate tab of a defective product generated during a process of notching an electrode plate to form a tab of an electrode assembly may be removed (e.g., cut) such that the defective product can be accurately and quickly identified in a back-end process, thereby improving the speed of the tab formation process and improving the quality of the electrode assembly.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

The present disclosure additionally includes the following numbered embodiments:
1. A method of manufacturing an electrode assembly for secondary batteries, the method comprising:
   a notching step of cutting and/or notching at least one side of an electrode plate to be included in an electrode assembly for secondary batteries to form at least one substrate tab;
   an inspection step of primarily selecting a defective product from among the electrode plates having the notched substrate tabs;
   a marking step of removing at least a part of the substrate tab of the electrode plate that has been primarily selected as the defective product; and
   a final inspection step of detecting the electrode plate from which the at least a part of the substrate tab has been removed to secondarily select the defective product.
2. The method according to embodiment 1, wherein the inspection step performs vision inspection on the electrode plate having the notched substrate tab to compare dimensions of the notched substrate tab with a preset substrate tab dimension range or to determine the presence of foreign matter.
3. The method according to embodiment 1 or 2, wherein the marking step removes a part of one of one or more substrate tabs of the primarily selected electrode plate.
4. The method according to embodiment 3, wherein the marking step removes a part of the substrate tab of the primarily selected electrode plate by laser cutting.
5. The method according to embodiment 3, wherein the marking step removes a part of the substrate tab of the primarily selected electrode plate by die cutting.
6. The method according to one of embodiments 1-5, further comprising a suction step of suctioning the removed part of the substrate tab after the marking step.
7. The method according to one of embodiments 1-6, wherein the final inspection step comprises:
   a cutting step of cutting the electrode plate into sheets; and
   a stacking step of stacking the cut sheets of the electrode plate.
8. The method according to embodiment 7, wherein the final inspection step selects the electrode plate from which at least a part of the substrate tab has been removed by irradiating the electrode plate with light using an optical sensor before the cutting step, and if the number of substrate tabs of the electrode plate that have not been at least partially removed is less than the number of notched substrate tabs, secondarily selects the electrode plate as a defective product.
9. The method according to embodiment 7, wherein the final inspection step selects the electrode plate from which at least a part of the substrate tab has been removed by comparing a size of the substrate tab of each sheet of the electrode plate with a preset substrate tab dimension range using a vision camera after the cutting step, and if the number of substrate tabs of each sheet of the electrode plate within the preset substrate tab dimension range is less than the number of notched substrate tabs, secondarily selects the electrode plate as a defective product.
10. The method according to one of embodiments 1-9, wherein the marking step removes at least a part of the substrate tab within 5% to 10% of a preset substrate tab length.
11. The method according to one of embodiments 1-10, wherein the marking step laser-cuts an entirety of an end or at least one of corners of the substrate tab.
12. The method according to one of embodiments 11-11, wherein the marking step forms a notch in at least a part of an end of the substrate tab.
13. The method according to one of embodiments 1-12, wherein
   in the notching step, the electrode plate unwound from a roll on which an electrode plate with a substrate tab not notched is wound is provided on a roll-to-roll driving unit, and the tab of the electrode plate is notched on the roll-to-roll driving unit,
   in the inspection step and the marking step, a defective product is primarily selected and marked from among the electrode plates having the notched substrate tabs, and in the final inspection step, the electrode plate unwound from a roll on which the electrode plate from which the defective product was primarily selected has been wound is secondarily selected and a defective product is discarded.
14. An apparatus for manufacturing an electrode assembly for secondary batteries, the apparatus comprising:
   a notching unit configured to cut and/or notch at least one side of an electrode plate to be included in an electrode assembly for secondary batteries to form at least one substrate tab;
   an inspection unit configured to primarily select a defective product from among the electrode plates having the notched substrate tabs;
   a tab marking unit configured to remove at least a part of the substrate tab of the electrode plate that has been primarily selected as the defective product; and
   a final defect inspection unit configured to detect the electrode plate from which the at least a part of the substrate tab has been removed to secondarily select the defective product.
15. The apparatus according to embodiment 14, wherein the inspection unit comprises a vision camera configured to perform vision inspection on the electrode plate having the notched substrate tab to compare dimensions of the notched substrate tab with a preset substrate tab dimension range or to determine the presence of foreign matter.
16. The apparatus according to embodiment 14 or 15, wherein the tab marking unit comprises:
   a laser cutting portion configured to remove a part of one of one or more substrate tabs of the primarily selected electrode plate by laser cutting; and
   a die cutting portion configured to remove a part of one of one or more substrate tabs of the primarily selected electrode plate by die cutting.
17. The apparatus according to one of embodiments 14-16, further comprising a suction unit configured to suction the removed part of the substrate tab.
18. The apparatus according to one of embodiments 14-17, wherein the final defect inspection unit comprises an optical sensor configured to irradiate the electrode plate with light in order to select the electrode plate having the at least partially removed substrate tab before cutting the electrode plate into sheets through an electrode plate cutting unit.
19. The apparatus according to one of embodiments 14-18, wherein the final defect inspection unit comprises a vision camera configured to acquire an image of each sheet of the electrode plate in order to select the electrode plate having the at least partially removed substrate tab after cutting the electrode plate into sheets through an electrode plate cutting unit.
20. The apparatus according to one of embodiments 14-19, wherein
   the electrode plate unwound from a roll on which an electrode plate with a substrate tab not notched is wound is provided on a roll-to-roll driving unit, and the notching unit notches the tab of the electrode plate on the roll-to-roll driving unit,
   the inspection unit primarily selects a defective product from among the electrode plates having the notched substrate tabs,
   the tab marking unit removes at least a part of the substrate tab of the electrode plate that has been primarily selected as the defective product, and
   the final defect inspection unit secondarily selects the electrode plate unwound from a roll on which the electrode plate from which the defective product was primarily selected has been wound and discards a defective product.

## Claims

1. A method of manufacturing an electrode assembly for a secondary battery, the method comprising:
a notching step comprising notching at least one side of each electrode plate of a plurality of electrode plates to form at least one substrate tab on each electrode plate of the plurality of electrode plates;
an inspection step comprising primarily selecting a defective product from among the plurality of electrode plates each having the at least one substrate tab;
a marking step comprising removing a portion of the at least one substrate tab of an electrode plate of the plurality of electrode plates that has been primarily selected as the defective product; and
a final inspection step comprising detecting the electrode plate from which the portion of the at least one substrate tab has been removed to secondarily select the defective product.

2. The method as claimed in claim 1, wherein the inspection step comprises performing a vision inspection on the plurality of electrode plates each having the at least one substrate tab to compare dimensions of the at least one substrate tab with a preset substrate tab dimension range or to determine a presence of foreign matter.

3. The method as claimed in claim 1 or 2, wherein the marking step comprises removing the portion of the at least one substrate tab of the electrode plate that has been primarily selected as the defective product by laser cutting; and/or wherein the marking step comprises removing the portion of the at least one substrate tab of the electrode plate that has been primarily selected as the defective product by die cutting.

4. The method according to one of claims 1 to 3, further comprising a suction step comprising suctioning the portion of the at least one substrate tab that was removed in the marking step.

5. The method according to one of claims 1 to 4, wherein the final inspection step comprises:
a cutting step comprising cutting the plurality of electrode plates into sheets; and
a stacking step comprising stacking the sheets.

6. The method as claimed in claim 5, wherein the final inspection step comprises:
selecting the electrode plate from which the portion of the at least one substrate tab has been removed by irradiating each electrode plate of the plurality of electrode plates with light using an optical sensor before the cutting step, and
secondarily selecting the electrode plate as the defective product in response to a number of substrate tabs of the electrode plate that have not been at least partially removed being less than a total number of substrate tabs of the electrode plate; and/or wherein the final inspection step comprises:
selecting the electrode plate from which the portion of the at least one substrate tab has been removed by comparing a size of the at least one substrate tab of each electrode plate cut to be the sheet among the plurality of electrode plates with a preset substrate tab dimension range using a vision camera after the cutting step, and
secondarily selecting the electrode plate as the defective product in response to a number of substrate tabs of the electrode plate within the preset substrate tab dimension range being less than a total number of substrate tabs of the electrode plate.

7. The method according to one of claims 1 to 6, wherein the marking step comprises removing from approximately 5% to approximately 10% of a preset substrate tab length of the at least one substrate tab; and/or wherein the marking step comprises laser-cutting an entirety of an end or at least one corner of the at least one substrate tab.

8. The method according to one of claims 1 to 7, wherein the marking step comprises forming a notch in at least a part of an end of the at least one substrate tab.

9. The method according to one of claims 1 to 8, wherein:
in the notching step, the electrode plate is unwound from a roll and provided on a roll-to-roll driving unit, and each electrode plate of the plurality of electrode plates is notched on the roll-to-roll driving unit to form the at least one substrate tab,
in the inspection step and the marking step, the defective product is primarily selected and marked from among the plurality of electrode plates each having the at least one substrate tab on the roll-to-roll driving unit, and
in the final inspection step, the electrode plate is secondarily selected at a back end of the roll-to-roll driving unit and the defective product is discarded.

10. An apparatus for manufacturing an electrode assembly for a secondary battery, the apparatus comprising:
a notching unit configured to notch at least one side of each electrode plate of a plurality of electrode plates to form at least one substrate tab on each electrode plate of the plurality of electrode plates, wherein the plurality of electrode plates are for forming the electrode assembly for the secondary battery;
an inspection unit configured to primarily select a defective product from among the plurality of electrode plates each having the at least one substrate tab;
a tab marking unit configured to remove a portion of the at least one substrate tab of an electrode plate that has been primarily selected as the defective product; and
a final defect inspection unit configured to detect the electrode plate from which the portion of the at least one substrate tab has been removed to secondarily select the defective product.

11. The apparatus as claimed in claim 10, wherein the inspection unit comprises a vision camera configured to perform vision inspection of the plurality of electrode plates each having the at least one substrate tab to compare dimensions of the at least one substrate tab with a preset substrate tab dimension range or to determine a presence of foreign matter.

12. The apparatus as claimed in claim 10 or 11, wherein the tab marking unit comprises at least one of a laser cutting portion and a die cutting portion, wherein:
the laser cutting portion is configured to remove the portion of the at least one substrate tab of the electrode plate that has been primarily selected as the defective product by laser cutting; and/or
the die cutting portion configured to remove the portion of the at least one substrate tab of the electrode plate that has been primarily selected as the defective product by die cutting.

13. The apparatus according to one of claims 10 to 12, further comprising a suction unit configured to suction the portion of the at least one substrate tab that has been removed.

14. The apparatus according to one of claims 10 to 13, wherein the final defect inspection unit comprises an optical sensor configured to irradiate the plurality of electrode plates with light to select the electrode plate from which the portion of the at least one substrate tab has been removed before cutting the plurality of electrode plates into sheets with an electrode plate cutting unit; and/or wherein the final defect inspection unit comprises a vision camera configured to acquire an image of each electrode plate of the plurality of electrode plates to select an electrode plate having a partially removed substrate tab after cutting the electrode plate into sheets with an electrode plate cutting unit.

15. The apparatus according to one of claims 10 to 14, further comprising a roll-to-roll driving unit through which
the electrode plate is unwound from a roll,
wherein:
the notching unit is configured to notch each electrode plate of the plurality of electrode plates on the roll-to-roll driving unit to form the at least one substrate tab,
the inspection unit is configured to primarily select the defective product from among the plurality of electrode plates each having the at least one substrate tab on the roll-to-roll driving unit,
the tab marking unit is configured to remove the portion of the at least one substrate tab of the electrode plate that has been primarily selected as the defective product on the roll-to-roll driving unit, and
the final defect inspection unit is configured to secondarily select, at a back end of the roll-to-roll driving unit, the electrode plate that was primarily selected as the defective product and to discard the defective product.
